# EUROPEAN PATENT APPLICATION

(11) **EP 1 416 483 A1**
(43) Date of publication of application: **06.05.2004**
(21) Application number: 02024398.6
(22) Date of filing: 04.11.2002
(51) Int. Cl.: G11B 17/04, G06F 1/16

(54) **Disk ejection device of a portable computer and method for controlling the disk ejection**

(71) Applicant: ELITEGROUP COMPUTER SYSTEMS CO.,LTD., Taipei (TW)
(72) Inventor: Ting, Yi-Chun, Taipei (TW); Chang, Chin-Ming, Taipei (TW); Chen, Yueh-Yang, Taipei (TW)
(74) Representative: Viering, Hans-Martin, Dipl.-Ing.

(57) **Abstract**

A disk ejection device of a portable computer and controlled method thereof, the disk ejection device includes a cover (2) installed on a computer body of the portable computer, at least one torsional spring (3) coupled between the computer body and the cover for providing a preliminary torque force to let the cover be in a closed state, and a controlled button (4) disposed on the computer body for controlling a disk ejection thereby to push the cover. Furthermore, the prior optical disk drive can be replaced by the other optical disk drives with different size-designed front boards, and the portable computer still can have a good-looking appearance due to the cover.

## Description

### BACKGROUND OF THE INVENTION

### (1). Field of The Invention

The present invention relates to a disk ejection device of a portable computer, and more particularly to a disk ejection device with a cover installed in the portable computer, whereby the portable computer has a good-looking appearance.

### (2). Description of the Related Art

In the development of the science and technology, a portable computer has been widely popular on the aspect of the electronic product, and an optical disk drive also has been one of fundamental equipments of the portable computer. In general, the optical disk drive will be designed with a front board for fitting an appearance and size of the portable computer, thereby to let the portable computer have a good-looking appearance, and be able to attract many consumers to buy them. However, the factories generally produce all kinds of portable computes respectively having different appearances and sizes, so that one kind of portable computer generally fails to fit all optical disk drives with different size-designed front boards.

### SUMMARY OF THE INVENTION

The primary purpose of the present invention is to provide a disk ejection device of a portable computer, in which the disk ejection device has a cover installed in the portable computer, so that the prior optical disk drive can be replaced by the other optical disk drives with different size-designed front boards, and the portable computer still can have a good-looking appearance due to the cover.

In accordance with one aspect of the present invention, to provide a disk ejection device of a portable computer, the portable computer comprising a computer body, a monitor coupled to a rear end of the computer body, a keyboard disposed on a top end of the computer body, and an optical disk drive installed inside the computer body and adjacent to a side thereof, the optical disk drive having a tray movably arranged therein. Furthermore, the disk ejection device comprises a cover pivotally connected on the side of the computer body, at least one torsional spring coupled between the computer body and the cover for providing a preliminary torque force to let the cover be in a closed state, and a controlled button disposed on the top end of the computer body for controlling a disk ejection of the optical disk drive thereby to let the tray push the cover.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

Other objects, features and advantages of the present invention will be more apparent from the following detailed description when read in conjunction with the accompanying drawings in which:
FIG. 1 is an exploded perspective view of a disk ejection device of a portable computer;
FIG. 2 is a perspective view of the disk ejection device of the portable computer;
FIG. 3 is a cross-sectional view of the disk ejection device of the portable computer;
FIG. 4 is a cross-sectional view of the disk ejection device of the portable computer when the tray is ejected outside the computer body; and
FIG. 5 shows a flow diagram of a controlled method of the disk ejection device of the portable computer.

### DETAILED DESCRIPTION OF THE PREFERRED EMBODIMENT

A description will now be given of the preferred embodiments of the present invention with reference to the accompanying drawings.

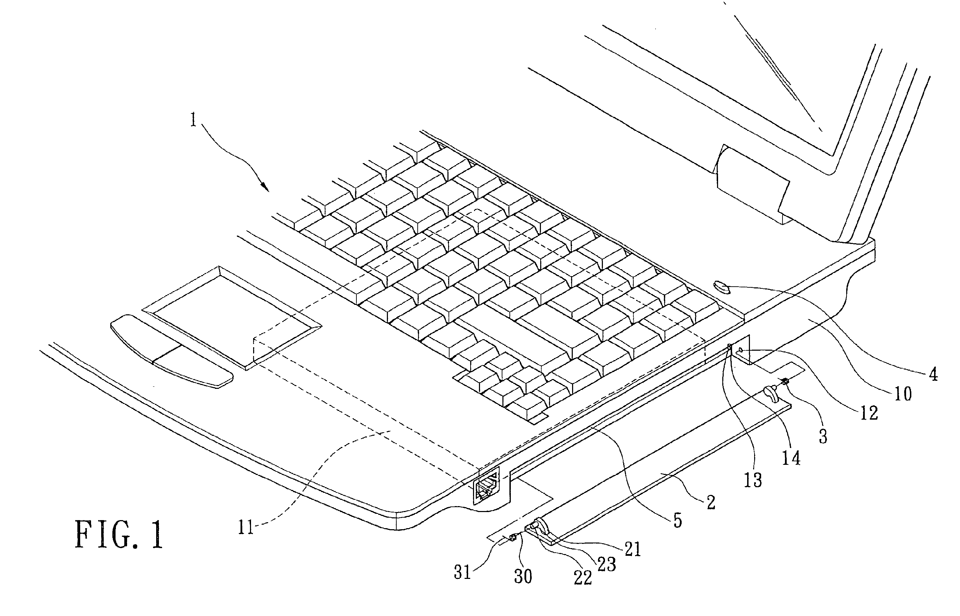

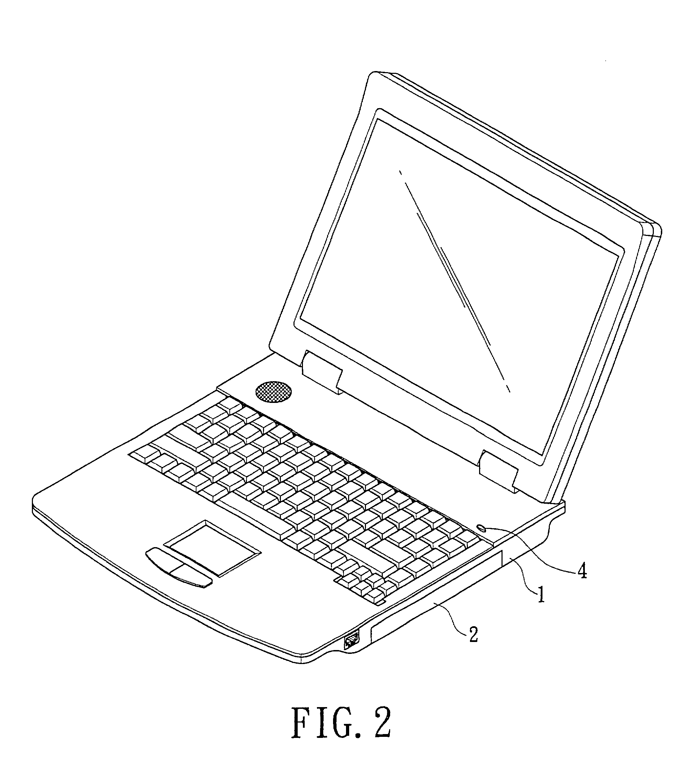

Referring to FIGS. 1 to 3, the present invention provides a disk ejection device of a portable computer, in which the portable computer 1 includes a computer body 10, a monitor coupled to a rear end of the computer body 10, a keyboard disposed on a top end of the computer body 10, and an optical disk drive 5 installed inside the computer body 10 and adjacent to a side of the computer body 10, wherein the optical disk drive 5 is an optical medium storage device, such as a CD-ROM, DVD-ROM, CD-RW, DVD-RAM, Combo drive (CD-RW and DVD-ROM), or DVD-RAM etc., and the optical disk drive 5 having a tray 51 movably arranged inside the computer body 10 and can be ejected outside the computer body 10.

The disk ejection device includes a cover 2, two torsional springs 3 and a controlled button 4, wherein:

The cover 2 has two ends each defining a fixed arm 21, the fixed arm 21 has a fixed portion 22 formed thereon, and the cover 2 is pivotally connected to two fixed hole 12 formed on the side of the computer body 10 through two fixed portions 22, respectively.

The torsional springs 3 each is installed on the fixed portion 22, and has a first end 30 and a second end 31 being extended from two ends thereof, respectively. The first end 30 of the torsional spring 3 is fixedly coupled on a fixed hole 23 of the fixed arm 21, and the second end 31 of the torsional spring 3 is fastenedly coupled on a fastened hole 14 of a fixed block 13 adjacent to the cover 2 of the computer body 10. Therefore, the torsional spring 3 is coupled between the computer body 10 and the cover 2 for providing a preliminary torque force to let the cover 2 be in a closed state.

The controlled button 4 is disposed on the top end of the computer body 10 and adjacent to a rear end of the keyboard, thereby driving the optical disk 5 through an applied program of the portable computer 1 for letting the tray 51 be ejected outside the computer body 10.

Furthermore, the computer body 10 has an accommodated space 11 formed at a predetermined position thereof for receiving the optical disk drive 5, and the accommodated space 11 has a predetermined width relative to a width of the cover 2 for fitting the other optical disk drives with different size-designed front boards which the factories provide, so that the cover 2 can be covered on an opening of the accommodated space 11 to let the optical disk drive 5 be hid inside the computer body 10.

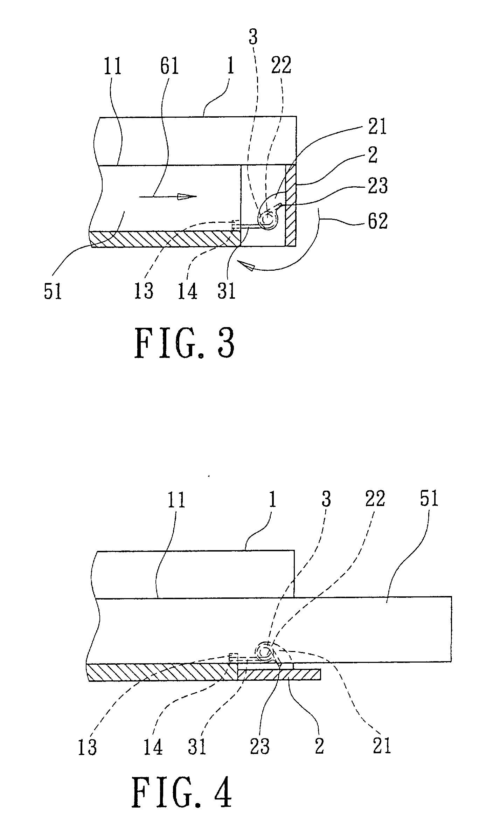

FIG. 3 shows the optical disk drive 5 to which the disk ejection device in no ejected force is provided, i.e. before the tray 51 of the optical disk drive 5 pushes the cover 2; at this time, the cover 2 will be in a closed state due to the preliminary torque force of the torsional spring 3. When the user presses the controlled button 4, the optical disk drive 5 will be drove to let the tray 51 be ejected outwardly (shown as an eject direction due to an arrow 61), then the tray 51 will provide an action force to let the cover 2 be pivotally rotated outwardly (shown as an rotated direction due to an arrow 62). Refer to FIG. 4, after the tray 51 is ejected outside the computer body 10, the cover 2 will be fixedly positioned under the tray 51; at this time, the tray 51 will be in an ejected state of the present invention. Furthermore, after the user places a disk on the tray 51, the tray 51 can be pushed back by the user's hand; at this time, the cover 2 will be automatically recovered in the closed state due to a recovered force of the torsional spring 3.

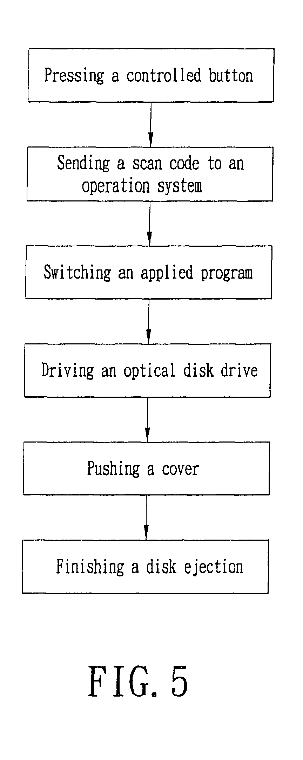

Please refer to FIG. 5, when the user would like to let the tray 51 be ejected outwardly, first to press the controlled button 4 of the disk ejection device, then a keyboard controller IC will send a scan code according to the controlled button to an operation system of the portable computer; when the operation system receives the scan code, it will switch an applied program of the controlled button 4; at this time, the applied program will drive the optical disk drive 5, and the tray 51 will push the cover 2 for letting the tray 5 be ejected outside the computer body 10, thereby to finish a disk ejection of the present invention.

According to the present invention, the accommodated space of the portable computer can suitably receive the other optical disk drives with different size-designed front boards, i.e. the prior optical disk drive installed in the portable computer can be replaced by the other optical disk drives with different size-designed front boards which the factories provide, whereby the replaceable possibility of the optical disk drive will be raised. The other optical disk drives with different size-designed front boards can be covered through the cover, thereby to let the optical disk drive be hid inside the portable computer. Therefore, in general, the user will only see an exterior of the cover relative to the portable computer, thereby to let the portable computer have a good-looking appearance.

To sum up, the disk ejection device of the portable computer of the present invention can solve a disadvantage of the portable computer of the prior art, i.e. the portable computer of the prior art that fails to be replaced with the other optical disk drives with different size-designed front boards, or even if the optical disk drive is replaced, the portable computer still fails to have a good-looking appearance.

Those skilled in the art will readily observe that numerous modification and alterations of the device may be made while retaining the teachings of the invention. Accordingly, the above disclosure should be construed as limited only by the metes and bounds of the appended claims.

## Claims

1. A disk ejection device of a portable computer, the portable computer comprising a computer body, a monitor coupled to a rear end of the computer body, a keyboard disposed on a top end of the computer body, and an optical disk drive installed inside the computer body and adjacent to a side thereof, the optical disk drive having a tray movably arranged therein; and the disk ejection device comprising a cover pivotally connected on said side of the computer body, at least one torsional spring coupled between the computer body and the cover for providing a preliminary torque force to let the cover be in a closed state, and a controlled button disposed on said top end of the computer body for controlling a disk ejection of the optical disk drive thereby to let the tray push the cover.

2. The disk ejection device as claimed in claim 1, wherein the cover has two ends each defining a fixed arm.

3. The disk ejection device as claimed in claim 2, wherein the fixed arm has a fixed portion formed thereon, and the torsional spring is installed on the fixed portion.

4. The disk ejection device as claimed in claim 3, wherein the fixed arm has a fixed hole for letting a first end of the torsional spring be fixedly coupled to the fixed hole; the computer body has a fixed block adjacent to the cover, and the fixed block has a fastened hole for letting a second end of the torsional spring be fastenedly coupled to the fastened hole.

5. The disk ejection device as claimed in claim 1, wherein the computer body has an accommodated space formed at a predetermined position thereof for receiving the optical disk drive.

6. The disk ejection device as claimed in claim 5, wherein the accommodated space has a predetermined width relative to a width of the cover for fitting the other optical disk drives with different size-designed front boards.

7. The disk ejection device as claimed in claim 5, wherein the cover is covered on the accommodated space for letting the optical disk drive be hid inside the computer body.

8. The disk ejection device as claimed in claim 1, wherein the controlled button is disposed on said top end of the computer body and adjacent to a rear end of the keyboard, thereby driving the ,optical disk through an applied program of the controlled button for letting the tray be ejected outside the computer body.

9. A portable computer, comprising:
a computer body having an accommodated space formed at a predetermined position thereof and adjacent to a side thereof;
a monitor coupled to a rear end of the computer body;
a keyboard disposed on a top end of the computer body;
a optical disk drive installed in the accommodated space of the computer body and having a tray movably arranged therein;
a cover pivotally connected on said side of the computer body and positioned at an opening of the accommodated space, and the cover covered on the accommodated space for letting the optical disk drive be hid inside the computer body and the accommodated space having a predetermined width relative to a width of the cover for fitting the other optical disk drive with different designed front boards;
at least one torsional spring coupled between the computer body and the cover for providing a preliminary torque force to let the cover be in a closed state, and
a controlled button disposed on said top end of the computer body and adjacent to a rear end of the keyboard, thereby driving the optical disk through an applied program of the controlled button for letting the tray be ejected outside the computer body.

10. The portable computer as claimed in claim 9, wherein the cover has two ends each defining a fixed arm.

11. The portable computer as claimed in claim 10, wherein the fixed arm has a fixed portion formed thereon; the torsional spring is installed on the fixed portion.

12. The portable computer as claimed in claim 11, wherein the fixed arm has a fixed hole for letting a first end of the torsional spring be fixedly coupled to the fixed hole; the computer body has a fixed block adjacent to the cover, and the fixed block has a fastened hole for letting a second end of the torsional spring be fastenedly coupled to the fastened hole.

13. The portable computer as claimed in claim 9, wherein the optical disk drive is an optical medium storage device.

14. The portable computer as claimed in claim 13, wherein optical medium storage device is a CD-ROM, DVD-ROM, CD-RW, DVD-RAM, Combo drive (CD-RW and DVD-ROM), or DVD-RAM.

15. A controlled method of a disk ejection device of an optical disk drive of a portable computer, comprising:
pressing a controlled button of the disk ejection device;
sending a scan code according to the controlled button to an operation system of the portable computer;
switching an applied program of the controlled button through the operation system;
driving a tray of the optical disk drive through the applied program;
pushing a cover pivotally connected on a side of the computer body for letting the tray be ejected outside the computer body; and
finishing a disk ejection.

16. The controlled method as claimed in claim 15, wherein said scan code is sent through a keyboard controller IC.
